# EUROPEAN PATENT SPECIFICATION

(11) **EP 3 708 935 B1**
(45) Date of publication and mention of the grant of the patent: **11.12.2024**
(21) Application number: 19000125.5
(22) Date of filing: 13.03.2019
(51) Int. Cl.: F25D 23/10, C09J 7/00, F16B 12/04, A47L 15/42

(54) **METHOD FOR FIXING A BUILT-IN DOMESTIC APPLIANCE TO A FURNITURE**
VERFAHREN ZUR BEFESTIGUNG EINES EINBAUHAUSHALTGERÄTS AN EIN MÖBELSTÜCK
PROCÉDÉ DE FIXATION D'UN APPAREIL DOMESTIQUE INTÉGRÉ SUR UN MEUBLE

(43) Date of publication of application: 16.09.2020
(73) Proprietor: ELECTROLUX APPLIANCES AKTIEBOLAG, 105 45 Stockholm (SE)
(72) Inventor: Baldo, Federico, 33080 Porcia (PN) (IT); Ricklin, Adrian, 33080 Porcia (PN) (IT); Naibo, Sergio, 33080 Porcia (PN) (IT)
(74) Representative: Electrolux Group Patents

(56) References cited:
- EP-A1- 2 722 623
- EP-A2- 0 718 459
- EP-B1- 0 718 459
- WO-A1-90/10362
- CN-A- 106 590 462
- CN-U- 207 347 501
- KR-A- 20110 000 953
- KR-B1- 100 766 108

## Description

### TECHNICAL FIELD

The present invention relates to the fixing of a built-in domestic appliance inside a furniture.

The present invention finds advantageous application in the fixing of a built-in refrigerator inside a furniture, to which the following treatment will make explicit reference without losing its generality.

### PRIOR ART

Nowadays, the built-in refrigerators, i.e. the refrigerators intended to be fixed inside a kitchen furniture, are fixed to the furniture by means of screw fixing systems.

In detail, currently to fix a built-in refrigerator inside a kitchen furniture, after placing the built-in refrigerator inside the kitchen furniture so that a first lateral wall of the built-in refrigerator is flanked and substantially in contact with a first lateral wall of the kitchen furniture and a second wall lateral of the built-in refrigerator is flanked and substantially in contact with a second lateral wall of kitchen furniture, an operator must screw a plurality of fixing screws between the first lateral wall of the built-in refrigerator and the first lateral wall of the kitchen furniture and a second plurality of fixing screws between the second lateral wall of the built-in refrigerator and the second lateral wall of kitchen furniture.

Subsequently, in order to connect the door of the built-in refrigerator to the door of the kitchen furniture, the operator must screw a guide profile (typically with a "T" cross section) to the door of the kitchen furniture by means of a third plurality of fixing screws, and he must fix a sled (typically with a "C" cross-section) at the edge of the door of the refrigerator, after having coupled the sled to the guide profile, so that the sliding coupling between the sled and the guide profile allows to open and close simultaneously the door of the kitchen furniture and the door of the built-in refrigerator.

Screw fixing systems require the use of screwdrivers (often of different shape and size since the fixing screws are not all the same) and they also require a certain skill in handling the screwdrivers, since at least some of the fixing screws are arranged in relatively uncomfortable position to reach. Moreover, when a built-in refrigerator is removed from a furniture (for example, to perform a repair operation), there is a (high) risk of losing one or more fixing screws, especially when the built-in refrigerator is reassembled in the furniture only after some days.

In light of what above, it is clear that the known screw fixing techniques require a certain amount of experience and practicality in the execution of the operations described above in order to correctly fix the built-in refrigerator inside the furniture and, at the same time, minimize the risk of damage to the furniture or the built-in refrigerator. Therefore, currently to mount, or disassemble, a built-in refrigerator in, or from, a furniture it is necessary to have a good dose of manual skills or it is necessary the assistance of a skilled operator, with a consequent cost increase. Relevant prior art can be found in KR 100 766 108 B1.

### DESCRIPTION OF THE INVENTION

The object of the present invention is to provide a method for fixing a built-in domestic appliance inside a furniture which are free from the drawbacks described above and which, in particular, allow to simplify and speed up the fixing, i.e. assembly, and the separation, i.e. dismantling, of a built-in domestic appliance inside a furniture.

According to the present invention, there is provided a method for fixing a built-in domestic appliance to a furniture, in accordance with what is described in the attached claim.

The fixing system includes:
a first fixing element comprising a first adhesive surface suitable to be glued to a first lateral wall of the built-in domestic appliance, a second adhesive surface parallel and opposite to the first surface adhesive and suitable to be glued to a first lateral wall of the furniture, a first removable protective film which initially covers the first adhesive surface, and a second removable protective film which initially covers the second adhesive surface; and
a second fixing element comprising a third adhesive surface suitable to be glued to a second lateral wall of the built-in domestic appliance and a fourth adhesive surface parallel and opposite to the third adhesive surface and suitable to be glued to a second lateral wall of the furniture, a third removable protective film which initially covers the third adhesive surface, and a fourth removable protective film which initially covers the fourth adhesive surface.

The method for fixing a built-in domestic appliance to a furniture includes the step of:
gluing the second adhesive surface of the first fixing element to the first lateral wall of the furniture, by first removing the second protective film;
gluing the fourth adhesive surface of the second fixing element to the second lateral wall of the furniture, by first removing the fourth protective film;
inserting the built-in domestic appliance into the furniture, leaving in position the first removable protective film and the third protective film;
removing the first removable protective film to glue the first adhesive surface of the first fixing element to the first lateral wall of the built-in domestic appliance; and
removing the third removable protective film to glue the third adhesive surface of the second fixing element to the second lateral wall of the built-in domestic appliance.

Preferred embodiments, not part of the current claim, are described below.

Preferably, the first removable protective film and/or the second removable protective film has a first graspable removal flap which extends beyond the first adhesive surface and/or the second adhesive surface to protrude outside the first lateral wall of the built-in domestic appliance when the built-in domestic appliance is inserted inside the furniture.

Preferably, the third removable protective film and/or the fourth removable protective film has a second graspable removal flap which extends beyond the third adhesive surface and/or the fourth adhesive surface to protrude outside the second lateral wall of the built-in domestic appliance when the built-in domestic appliance is inserted inside the furniture.

Preferably, the first fixing element comprises a first separable/joinable several times connecting device which is interposed between the first adhesive surface and the second adhesive surface.

Preferably, the second fixing element comprises a second separable/joinable several times connecting device which is interposed between the third adhesive surface and the fourth adhesive surface.

Preferably, the first separable/joinable several times connecting device comprises a first body which supports the first adhesive surface and a second body which supports the second adhesive surface and is connected to the first body in such a way to be separable/joinable several times.

Preferably, the second separable/joinable several times connecting device comprises a third body which supports the third adhesive surface and a fourth body which supports the fourth adhesive surface and is connected to the third body in such a way to be separable/joinable several times.

Preferably, each separable connecting device uses a closure system with micro-slots and micro-hooks.

Preferably, the second fixing element comprises a spacer group which is interposed between the third adhesive surface and the fourth adhesive surface and has an adjustable thickness to vary the distance between the third adhesive surface and the fourth adhesive surface.

Preferably, the spacer group comprises: an inner plate which is connected to the third adhesive surface; an outer plate which is connected to the fourth adhesive surface; a cylindrical seat solidally constrained to the inner plate or the external plate; and an adjustment element which is inserted in the cylindrical seat, is rotatably mounted to the outer plate or to the inner plate, and is adapted to be rotated relative to the cylindrical seat to vary the distance between the two plates.

Preferably, the cylindrical seat is threaded and the adjustment element is threaded and screwed into the cylindrical seat.

Preferably, the two plates are connected to each other by means of an "U" shaped flexible connecting element.

Preferably, the second fixing element comprises a removable reference plate which extends in a direction orthogonal to the third and fourth adhesive surfaces to abut against an inner edge of the door of the furniture when the second fixing element is resting on the second lateral wall of the furniture so as to allow correct arrangement of the second fixing element.

Preferably, the fixing system comprises: a guide profile; a third fixing element comprising a fifth adhesive surface suitable to be glued to the door of the furniture, a sixth adhesive surface parallel and opposite to the fifth adhesive surface and suitable to be glued to the guide profile, and a fifth removable protective film which initially covers the fifth adhesive surface; and a sled which can be fixed to a door of the built-in domestic appliance and shaped to can slidably be coupled to the guide profile.

Preferably, the third fixing element comprises a third separable/joinable several times connecting device which is interposed between the fifth adhesive surface and the sixth adhesive surface.

Preferably, the third separable/joinable several times connecting device comprises a fifth body which supports the fifth adhesive surface and a sixth body which supports the sixth adhesive surface and is connected to the fifth body in such a way to be separable/joinable several times.

Preferably, the method for fixing a built-in domestic appliance to a furniture comprising, after gluing the fourth adhesive surface of the second fixing element to the second lateral wall of the furniture and before inserting the built-in domestic appliance into the furniture, the further step of adjusting the thickness of the spacer group so that, once the built-in domestic appliance has been inserted into the furniture, the first lateral wall of the built-in domestic appliance to be contact with the first adhesive surface and the second lateral wall of the built-in appliance to be in contact with the third adhesive surface.

Preferably, includes also the step of: gluing the sixth adhesive surface to the guide profile; fixing the sled to a door of the built-in domestic appliance; coupling the sled with the guide profile before or after having fixed the sled to the door of the built-in domestic appliance; and gluing the fifth adhesive surface to the door of the furniture, by first removing the fifth removable protective film and by closing the door of the furniture towards the door of the built-in domestic appliance supporting the sled and the guide profile.

### BRIEF DESCRIPTION OF THE DRAWINGS

The present invention will be described with reference to the attached drawings, which illustrate some nonlimiting examples of embodiment thereof, in which:
- figure 1 is a perspective view of a built-in refrigerator fixed inside a furniture with a fixing system in accordance with the present invention;
- figure 2 is a perspective view of a first fixing element of the fixing system of the invention;

- figures 3 and 4 are two different perspective views of a second fixing element of the fixing system of the invention;
- figure 5 is a longitudinal section of the second fixing element of figures 3 and 4 fixed to a wall of the furniture;
- figure 6 is a schematic view of a third fixing element of the fixing system of the invention;
- figure 7 is a schematic view of a variant of the third fixing element of Figure 6; and
- figures from 8 to 12 show schematic views of the successive fixing steps to fix the built-in refrigerator inside the furniture, according to the fixing method of the invention.

### PREFERRED EMBODIMENTS OF THE INVENTION

In the attached figures, the number 1 indicates as whole a fixing system for a built-in refrigerator 2 inside a kitchen furniture 3.

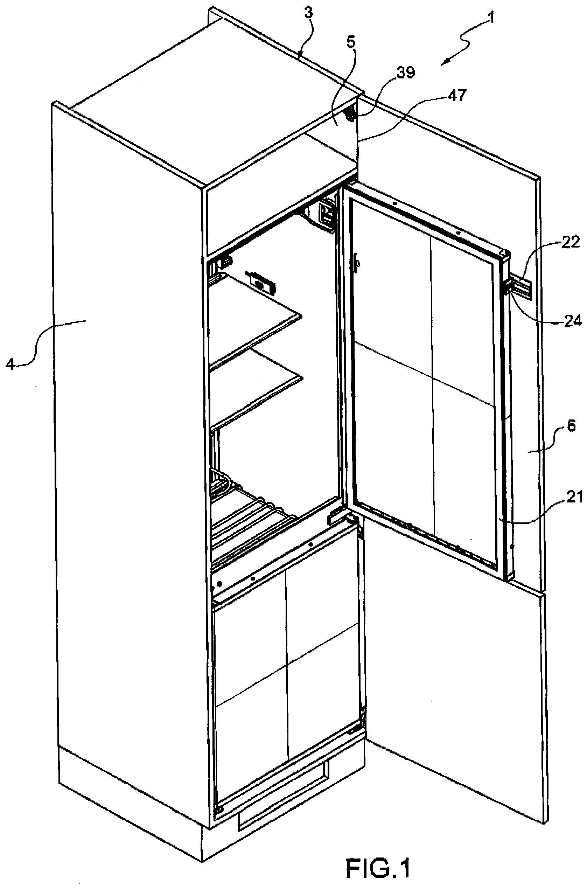

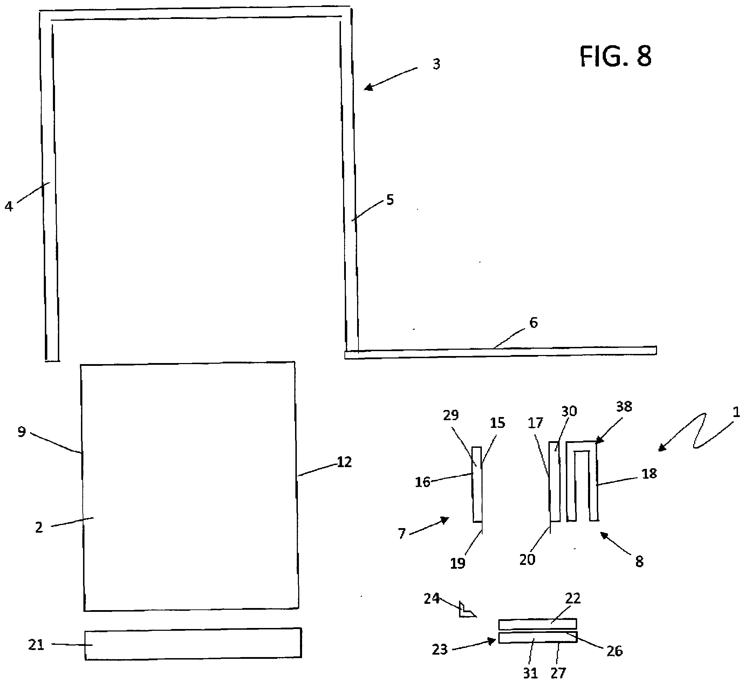

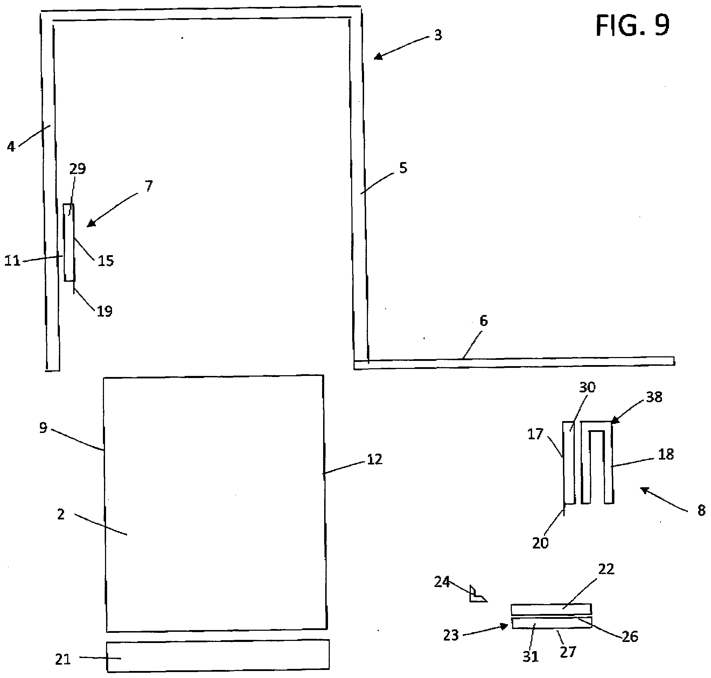

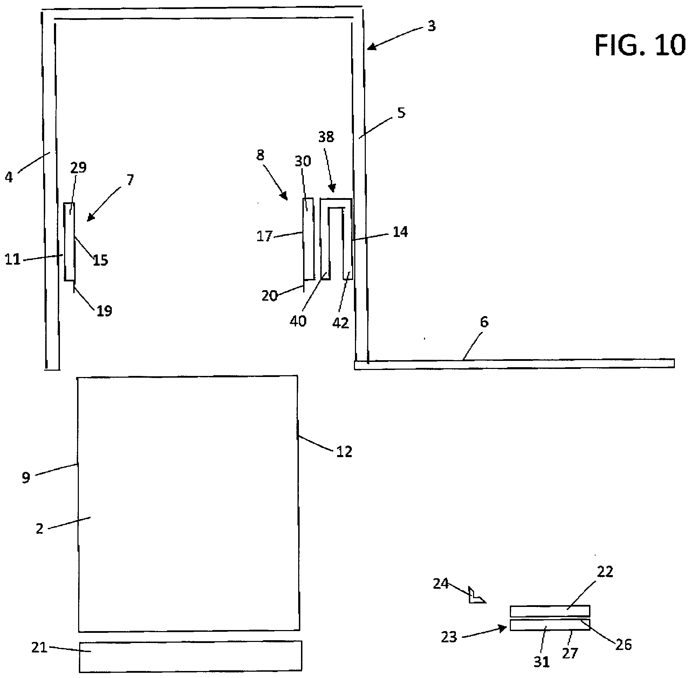

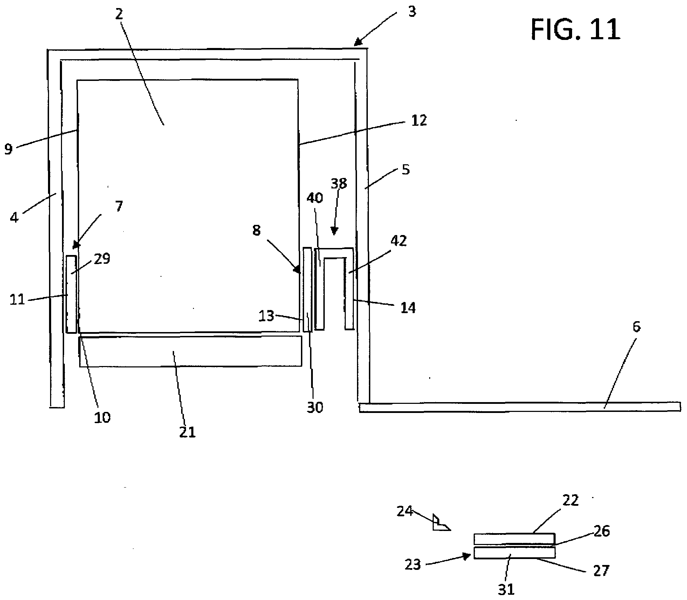

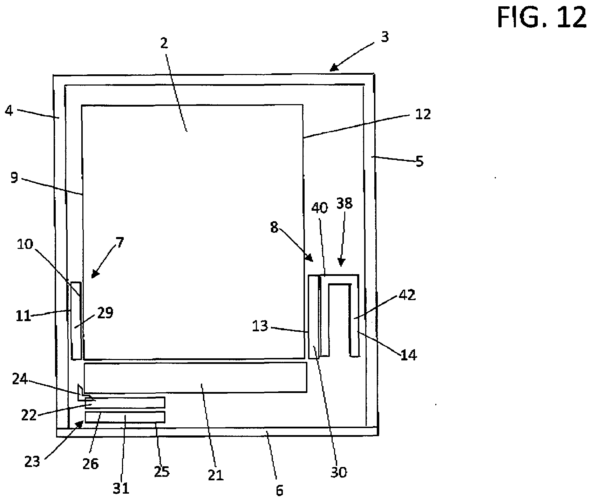

According to what is illustrated in figure 1 and in figures 8-12, the furniture 3 has a lateral wall 4, a lateral wall 5 which is parallel and opposite to the lateral wall 4, and a door 6 which is hinged to the lateral wall 5.

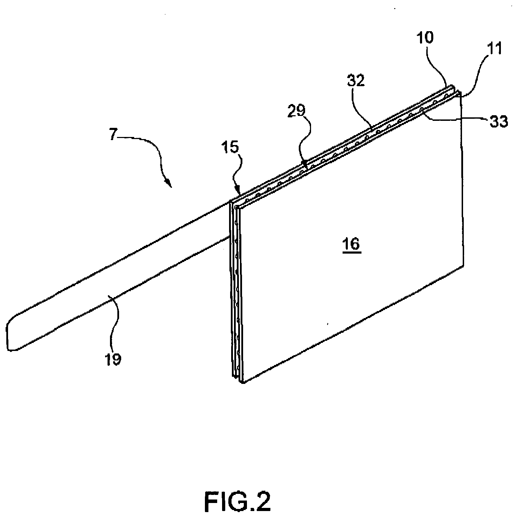

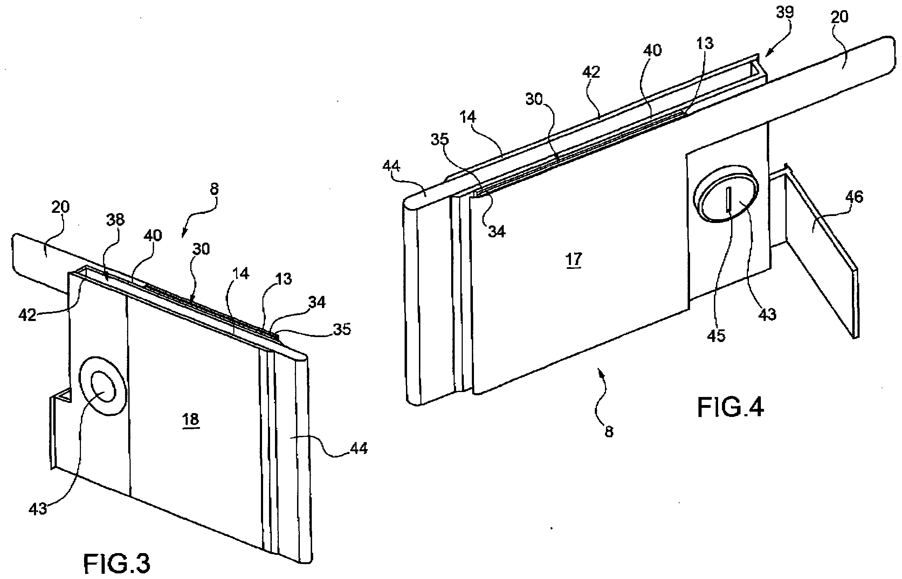

The fixing system 1 illustrated in the attached figures comprises a fixing element 7 (shown in figure 2) and a fixing element 8 (shown in figures 3 and 4).

The fixing element 7 illustrated in figure 2 is suitable to fix a lateral wall 9 of the built-in refrigerator 2 to the lateral wall 4 of the furniture 3; the fixing element 7 has an adhesive surface 10 which, in use, is glued to a lateral wall 9 of the built-in refrigerator 2 and an adhesive surface 11, which is parallel and opposite the adhesive surface 10, and which, in use, is glued to the lateral wall 4 of the furniture 3.

The fixing element 8 illustrated in figures 3 and 4 is suitable, instead, to fix a lateral wall 12 of the built-in refrigerator 2 to the lateral wall 5 of the furniture 3; the fixing element 8 has an adhesive surface 13 which, in use, is glued to the lateral wall 12 of the built-in refrigerator 2 and an adhesive surface 14, which is parallel and opposite to the adhesive surface 13, and which, in use, is glued to the lateral wall 5 of the furniture 3.

As shown in figures 2, 3 and 4, the adhesive surfaces 10-11 and 13-14 are initially covered by respective removable protective films 15, 16, 17 and 18: a removable protective film 15 is arranged on the adhesive surface 10; a removable protective film 16 is arranged on the adhesive surface 11; a removable protective film 17 is arranged on the adhesive surface 13, and a removable protective film 18 is arranged on the adhesive surface 14.

Furthermore, preferably, the removable protective film 15 has a graspable removal flap 19 extending beyond the adhesive surface 10 so that, when the adhesive surface 10 is resting on the lateral wall 9 of the built-in refrigerator 2, the graspable removal flap 19 protrudes outwardly from the lateral wall 9 of the built-in refrigerator 2 (and therefore it can be easily grasped by an installer to be pulled, so as to remove the removable protective film 15). Similarly, the removable protective film 17 preferably has a graspable removal flap 20 extending beyond the adhesive surface 13 so that, when the adhesive surface 13 is resting on the lateral wall 12 of the 2 built-in refrigerator 2, the graspable removal flap 20 protrudes outwardly from the lateral wall 12 of the 2 built-in refrigerator 2 (and therefore it can be easily grasped by an installer to be pulled so as to remove the removable protective film 17).

In this way, the installer who fixes the built-in refrigerator 2 in the furniture 3 can easily remove the removable protective films 15 and 17, by pulling the respective graspable removal flaps 19 and 20, after inserting the built-in refrigerator 2 inside of the furniture 3 in the correct position.

In this regard, preferably each removable protective film 15 and 17 is made of a low-friction smooth material so as to permit the built-in refrigerator 2 to slide between the removable protective films 15 and 17, reducing friction to a minimum.

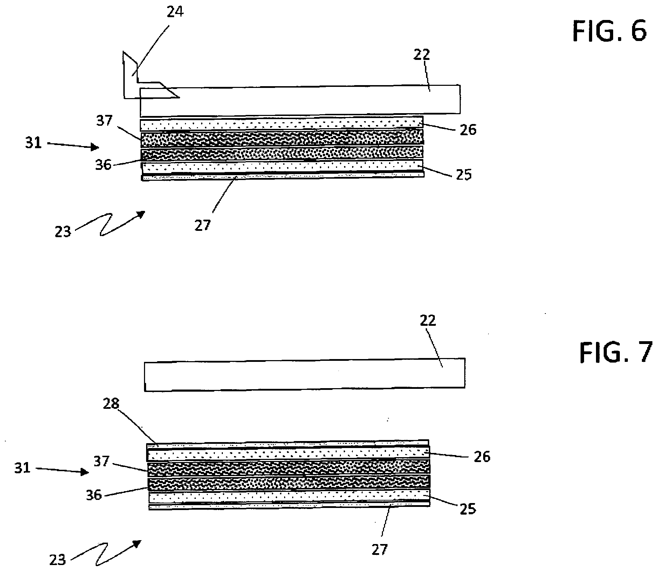

As shown in figure 6, to fix a door 21 of the built-in refrigerator 2 to the door 6 of the furniture 3, the fixing system 1 shown in the attached figures preferably comprises a guide profile 22 intended to be fixed to the door 6 of the furniture 2 through a fixing element 23 (shown in figures 6, 7 and 10) and a sled 24 intended to be fixed to the door 21 of the built-in refrigerator 2 and shaped so that it can be slidably coupled to the guide profile 22.

In detail and as illustrated in figure 6, the fixing element 23 preferably comprises an adhesive surface 25 intended to be glued to the door 6 of the furniture 3 and an adhesive surface 26, which is parallel and opposite the adhesive surface 25, and is intended to be glued to the guide profile 22. Preferably, the adhesive surface 26 of the fixing element 23 is glued from the beginning to the guide profile 22 (i.e. the guide profile 22 is already glued to the fixing element 23 and therefore this gluing operation must not be carried out by the installer); in this case, the fixing element 23 comprises a single removable protective film 27, which is arranged to initially cover the adhesive surface 25, i.e. before the adhesive surface 25 is glued to the door 6 of the furniture 3. According to a different embodiment shown in figure 7, initially the fixing element 23 is apart from the guide profile 22 and therefore the fixing element 23 comprises a further removable protective film 28 to initially cover the adhesive surface 26, i.e. before the adhesive surface 26 is glued to the guide profile 22.

According to what shown in figure 2, the fixing element 7 preferably comprises a separable/joinable several times connecting device 29 which is interposed between the adhesive surface 10 and the adhesive surface 11. As shown in figures 3 and 4, the fixing element 8 comprises a separable/joinable several times connecting device 30 which is interposed between the adhesive surface 13 and the adhesive surface 14. As shown in figures 6 and 7, the fixing element 23 preferably comprises a separable/joinable several times connecting device 31 which is interposed between the adhesive surface 25 and the adhesive surface 26.

The connecting devices 29, 30 and 31, advantageously, allow to separate and subsequently join together, respectively, the adhesive surfaces 10 and 11, the adhesive surfaces 13 and 14, and the adhesive surfaces 25 and 26, thus allowing the disassembly of the built-in refrigerator 2 from the furniture 3 and the subsequent re-assembly of the built-in refrigerator 2 into the furniture 3.

According to what shown in figure 2, the separable/joinable several times connecting device 29 preferably comprises a body 32 which supports the adhesive surface 10, and a body 33 which supports the adhesive surface 11 and is connected to the body 32 in such a way to be separable/joinable several times, so that every time you want to separate the built-in refrigerator 2 from the furniture 3 (i.e. you want to separate the lateral wall 9 of the built-in refrigerator 2 from the lateral wall 4 of the furniture 3) you just need to separate the two bodies 32 and 33, for example by inserting a thin tool between the bodies 32 and 33 of the connecting device 29 so that the thin tool act as a lever for applying a separating force to the bodies 32 and 33.

According to what shown in figures 3 and 4, the separable/joinable several times connection device 30 preferably comprises a body 34 which supports the adhesive surface 13 and a body 35 which supports the adhesive surface 14 and is connected to the body 34 in such a way to be separable/joinable several times, so that whenever you want to separate the built-in refrigerator 2 from the furniture 3 (i.e. you want to separate the lateral wall 12 of the built-in refrigerator 2 from the lateral wall 5 of the furniture 3) you just need to separate the two bodies 34 and 35, for example by inserting a thin tool between the bodies 34 and 35 of the connecting device 30 so that the thin tool act as a lever for applying a separating force to the bodies 34 and 35.

According to what shown in figures 6 and 7, the separable/joinable several times device 31 preferably comprises a body 36 which supports the adhesive surface 25 and a body 37 which supports the adhesive surface 26 and is connected to the body 36 in such a way to be separable/joinable several times, so that whenever you want to separate the guide profile 22 from the door 6 of the furniture 3 (or if you want to separate the door 21 of the built-in refrigerator 2 from the door 6 of the piece of furniture 3) you just need to separate the two bodies 36 and 37 between them, for example by inserting a thin tool between the bodies 36 and 37 of the connecting device 31 so that the thin tool act as a lever for applying a separating force to the bodies 36 and 37.

In detail, in the embodiment illustrated in the attached figures, the connecting devices 29, 30 and 31 use a closing system with micro-slots and micro-hooks to keep the respective bodies 32-37 joined together (i.e. in a body 32-37 are present a plurality of micro-slots while in the other body 32-37 there are a plurality of micro-hooks, which couple mechanically and separably with respective micro-slots) .

In particular, the bodies 32-37 of the connecting devices 29, 30 and 31 may be made of fabric of polymeric material, or of natural fibres.

For example, according to a variant not shown, the body 32, the body 34 and the body 36 could be made by intertwining the constituent fabric so as to define a first weft, while the body 33, the body 35 and the body 37 could be made by intertwining the same fabric according to a second weft, which is different from the first weft and is configured so as to be suitable to be coupled and decoupled with the first weft several times, so as to be suitable to easily separate/join several times the bodies 32 and 33, 34 and 35, 36 and 37 among them.

According to a further embodiment, not shown, the bodies of the connecting devices 29, 30 and 31 can be made of a non-woven fabric, for example made of polymeric material or alternatively natural fibres, configured to be separable and joinable several times. According to a variant of said embodiment, the bodies 32 and 33 of the connecting device 29, the bodies 34 and 35 of the connecting device 30 and the bodies 36 and 37 of the connecting device 31 could be made in such a way as to form a single a layer made, for example, of non-woven fabric, or fabric, which can be separated and reattached several times.

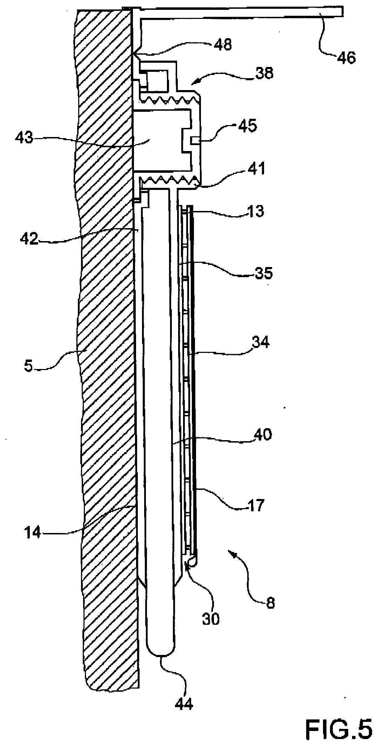

According to what shown in figure 5, the fixing element 8 preferably further comprises a spacer assembly 38 which is interposed between the adhesive surface 13 and the adhesive surface 14 and which has an adjustable thickness to vary the distance between the adhesive surfaces 13 and 14.

The spacer assembly 38 allows the adhesive surfaces 13 and 14 to be moved apart or brought together so as to compensate any small differences in width between the furniture 3 and the built-in refrigerator 2 and so as that the fixing element 8 have a thickness greater than the hinges 39 (partially shown in Figure 1), arranged on the lateral wall 5 of the furniture 3 (i.e. the hinges 39 by means of which the door 6 of the furniture 3 is connected to the lateral wall 5) in order to ensure that once the built-in refrigerator 2 is inserted in the furniture 3, the built-in refrigerator 2 comes into contact with the removable protective film 17 or, after the removable protective film 17 has been removed, with the adhesive surface 13. Indeed, if this were not the case, the fixing between the built-in refrigerator 2 and the furniture 3 could be compromised.

Particularly, the spacer assembly 38 shown in figure 5 comprises an inner plate 40, which is connected to the adhesive surface 13 (by means of the interposing of the connecting device 30) and carries a cylindrical seat 41, and an outer plate 42, which is connected to the adhesive surface 14 and carries an adjustment element 43 which is rotatably mounted on the outer plate 42. The inner plate 40 and the outer plate 42 are arranged in such a way that the cylindrical seat 41 rotatably receives the adjustment element 43 so that by rotating the adjustment element 43 inside the cylindrical seat 41 it is possible to vary the distance between the two plates 40 and 42.

In detail, the spacer assembly 38 shown in figure 5 has a threaded cylindrical seat 41 and a threaded adjusting element 43 screwed into the cylindrical seat 41 so that by screwing or unscrewing the adjustment element 43 with respect to the cylindrical seat 41 there is a forward or a retraction of the adjustment element 43, and therefore of the external plate 42 to which said adjustment element 43 is connected, with respect to the internal plate 40.

Moreover, as shown in figure 5, preferably the two plates 40 and 42 are connected to each other by means of an "U" shaped flexible connecting element 44. This flexible connecting element 44 serves to keep the two plates 40 and 42 constrained to each other, so that in the case that the adjusting element 43 is rotated too much until to cause, unintentionally, the decouple of the adjusting element 43 with respect to the cylindrical seat 41, the plates 40 and 42 remain bound to each other.

Furthermore, again with particular reference to figure 5, the adjustment element 43 preferably has a maneuvering portion 45 (typically provided with a slit wide enough to be engaged also by a coin) for screwing and unscrewing the adjustment element 43. Preferably, this maneuvering portion 45 is arranged to be accessible even when the fixing element 8 is fixed to the lateral wall 5 of the furniture 3.

According to a non-illustrated embodiment of the spacer assembly 38, the cylindrical seat 41 could solidaly constrained to the outer plate 42 and the adjusting element 43 could be mounted rotatable to the inner plate 40.

In order to facilitate the correct arrangement of the fixing element 8, the fixing element 8 shown in figure 3, 4 and 5, preferably comprises a removable reference plate 46 which extends in a direction orthogonal to the adhesive surfaces 13 and 14 to abut against an inner edge 47 (shown in Figure 1)of the door 6 of the furniture 3 when the fixing element 8 is resting against the lateral wall 5 of the piece of furniture 3. Preferably, the removable reference plate 46 is connected to the fixing element 8 by interposition of a weakening portion 48, so as to facilitate the removal of the reference plate 46, once the fixation device 8 has been fixed to the lateral wall 5 of the furniture 3 by means of the adhesive surface 14.

With particular reference to figures from 8 to 12, a method for fixing the built-in refrigerator 2 in the furniture 3 which can be implemented using the above described fixing system 1 is described.

As shown in figure 8, initially the built-in refrigerator 2 is outside the furniture 3 and the three fixing elements 7, 8 and 23 are apart from the built-in refrigerator 2 and from the furniture 3.

Initially, the installer removes the removable protective film 16 from the adhesive surface 11 of the fixing element 7 and then glues the adhesive surface 11 to the lateral wall 4 of the furniture 3 to firmly connect the fixing element 7 to the lateral wall 4 of the furniture 3 in a position such as to ensure that the preferred graspable removal flap 19 will protrude with respect to the lateral wall 9 of the built-in refrigerator 2 (when the built-in refrigerator 2 will be positioned inside the furniture 3).

Subsequently, or even previously, the installer removes the removable protective film 18 from the adhesive surface 14 of the fixing element 8 and then glues the adhesive surface 14 to the lateral wall 5 of the furniture 3 to firmly connect the fixing element 8 to the lateral wall 5 of the furniture 3 in a position such as to ensure that the preferred graspable removal flap 20 will protrude with respect to the lateral wall 12 of the built-in refrigerator 2 (when the built-in refrigerator 2 will be positioned inside the furniture 3). Preferably, in order to correctly arrange the fixing element 8 shown in figures 3, 4 and 5 to the lateral wall 5 of the furniture 3, the installer, before gluing the adhesive surface 14 to the lateral wall 5 of the furniture 3, arranges the fixing element 8 so that the removable reference plate 46 abut against the inner edge 47 of the door 6 of the furniture 3. After the adhesive surface 14 has been glued to the lateral wall 5 of the furniture 3, then the installer breaks and removes the removable reference plate 46.

At this point, the installer adjusts, if necessary, the thickness of the fixing element 8 acting on the adjustment element 43 of the spacer assembly 38. The adjustment of the thickness of the fixing element 8 has the purpose of ensuring that, once the built-in refrigerator 2 has been inserted in the furniture 3, the lateral wall 9 of the built-in refrigerator 2 is in contact with the adhesive surface 10 of the fixing element 7 and that the lateral wall 12 of the built-in refrigerator 2 is in contact with the adhesive surface 13 of the fixing element 8. In detail, once the fixing element 7 has been fixed to the lateral wall 4 of the furniture 3 and the fixing element 8 has been fixed to the lateral wall 5 of the furniture 3, the adjustment element 43 is rotated, for example by means of a normal screwdriver or even by a coin, until the adhesive surfaces 10 and 13, still covered by the respective protective films 15 and 17, do not lie between them at a distance which is substantially equal to the distance between the walls 9 and 12 of the built-in refrigerator 2.

Once the thickness of the fixing element 8 has been preferably adjusted, the installer inserts the built-in refrigerator 2 into the furniture 3, leaving the protection films 15 and 17 in position and then making slide the walls 9 and 12 between the films 15 and 17 of protection.

Once the refrigerator 2 has been correctly inserted in the furniture 3, the installer removes the removable protective film 15, preferably through the graspable removal flap 19, to glue the adhesive surface 10 of the fixing element 7 to the lateral wall 9 of the built-in refrigerator 2 and removes (subsequently or formerly) the removable protective film 17, preferably by means of the graspable removal flap 20, to glue the adhesive surface 13 of the fixing element 8 to the lateral wall 12 of the built-in refrigerator 2.

When the door 21 of the built-in refrigerator 2 must also be fixed to the door 6 of the furniture 3, the installer must initially glue the adhesive surface 26 of the fixing element 23 to the guide profile 22, after removing the removable protective film 28 (obviously, if the fixing element 23 is already pre-glued to the guide profile 22, this operation is not necessary). Subsequently, the installer preferably fixes the sled 24 to the door 21 of the built-in refrigerator 2 (typically by means of a screw fixing system of known type); alternatively, the sled 24 could be already pre-mounted on the door 21 of the built-in refrigerator 2. At this point, the installer couples the guide profile 22 (which is preferably glued to the fixing element 23 and is still separated from the door 6 of the furniture 3) to the sled 24. Finally, the installer removes the protective film 27 from the adhesive surface 25 and he glues the adhesive surface 25 of the fixing element 23 to the door 6 of the furniture 3; this operation is performed extremely easily and quickly, by simply closing the door 6 of the furniture 3 and pressing on the door 6 so that the door 6 sticks to the adhesive surface 25 of the fixing element 23.

According to a possible embodiment, the guide profile 22 has a "*disposable*" support system which keeps the guide profile 22 in the correct position after the guide profile 22 has been mounted on the sled 24 and before the door 6 of the furniture 3 is closed against the guide profile 22 to glue the adhesive surface 25 of the fixing element 23 to the door 6.

According to a further not shown embodiment, any one or all of the separable connecting devices 29, 30 and 31 are not present; in this case, to separate the built-in refrigerator 2 from the furniture 3 to which the built-in refrigerator 2 is fixed is necessary to brake (cut) the fixing elements 7, 8 and 23 and to use new fixing elements 7, 8 and 23 to subsequent newly insert the built-in refrigerator 2 into the furniture 3.

In the embodiment shown in the attached figures, only the removable protective films 15 and 17 are provided with the graspable removal flaps 19 and 20; according to other embodiments not shown, the protective films 16 and 18 are provided with respective graspable removal flaps in addition or in alternative to the graspable removal flaps 19 and 20 of the removable protective films 15 and 17 (in this case, the fixing elements 7 and 8 could be glued firstly to the built-in refrigerator 2 and then to the furniture 3 instead of being glued firstly to the furniture 3 and then to the built-in refrigerator 2).

In the embodiment shown in the attached figures, the built-in domestic appliance 2 which is mounted inside the furniture 3 is a refrigerator; according to other embodiments not illustrated, the built-in domestic appliance 2 which is mounted inside the furniture 3 is for example an oven, a dishwasher, or a washing machine.

The fixing system 1 described above has numerous advantages.

Firstly, the fixing system 1 described above allows the assembly and possible subsequent disassembly of the built-in refrigerator 2 into the furniture 3 in a quickly and easy manner (even without using any tool like a screwdriver). Advantageously, the fixing method described above can be easily performed even by an unskilled user.

Likewise, even the separation of a built-in refrigerator 2 from a furniture 3, after they have been fixed with the fixing system 1 described above, will be much simpler and, therefore, easily performable even by an unskilled user. Indeed, thanks to the presence of separable connecting devices 29, 30 and 31, each time it is desired to separate the built-in refrigerator 2 from the furniture 3 to which the built-in refrigerator 2 is fixed, it just need to separate the separable connecting devices 29, 30 and 31.

Finally, the fixing system 1 described above is easy and inexpensive to manufacture.

### LIST OF REFERENCE NUMBERS OF FIGURES

- 1: fixing system
- 2: refrigerator
- 3: furniture
- 4: lateral wall of the furniture
- 5: lateral wall of the furniture
- 6: door of the furniture
- 7: fixing element
- 8: fixing element
- 9: lateral wall of the refrigerator
- 10: adhesive surfaces
- 11: adhesive surfaces
- 12: lateral wall of the refrigerator
- 13: adhesive surfaces
- 14: adhesive surfaces
- 15: removable protective film
- 16: removable protective film
- 17: removable protective film
- 18: removable protective film
- 19: graspable removal flap
- 20: graspable removal flap
- 21: door of the refrigerator
- 22: guide profile
- 23: fixing element
- 24: sled
- 25: adhesive surfaces
- 26: adhesive surfaces
- 27: removable protective film
- 28: removable protective film
- 29: connecting device
- 30: connecting device
- 31: connecting device
- 32: body
- 33: body
- 34: body
- 35: body
- 36: body
- 37: body
- 38: spacer group
- 39: hinges
- 40: inner plate
- 41: cylindrical seat
- 42: outer plate
- 43: adjustment element
- 44: flexible connecting element
- 45: maneuvering portion
- 46: removable reference plate
- 47: inner edge
- 48: weakening portion

## Claims

1. Method for fixing a built-in domestic appliance (2) to a furniture (3) using a fixing system (1) including:
a first fixing element (7) comprising a first adhesive surface (10) suitable to be glued to a first lateral wall (9) of the built-in domestic appliance (2), a second adhesive surface (11) parallel and opposite to the first surface adhesive (10) and suitable to be glued to the first lateral wall (4) of the furniture (3), a first removable protective film (15) which initially covers the first adhesive surface (10), and a second removable protective film (16) which initially covers the second adhesive surface (11); and a second fixing element (8) comprising a third adhesive surface (13) suitable to be glued to a second lateral wall (12) of the built-in domestic appliance (2) and a fourth adhesive surface (14) parallel and opposite to the third adhesive surface (13) and suitable to be glued to the second lateral wall (5) of the furniture (3), a third removable protective film (17) which initially covers the third adhesive surface (13), and a fourth removable protective film (18) which initially covers the fourth adhesive surface (14); the method for fixing includes the steps of:
gluing the second adhesive surface (11) of the first fixing element (7) to the first lateral wall (4) of the furniture (3), by first removing the second protective film (16);
gluing the fourth adhesive surface (14) of the second fixing element (8) to the second lateral wall (5) of the furniture (3), by first removing the fourth protective film (18);
inserting the built-in domestic appliance (2) into the furniture (3), leaving in position the first removable protective film (15) and the third protective film (17) ;
removing the first removable protective film (15) to glue the first adhesive surface (10) of the first fixing element (7) to the first lateral wall (9) of the built-in domestic appliance (2); and
removing the third removable protective film (17) to glue the third adhesive surface (13) of the second fixing element (8) to the second lateral wall (12) of the built-in domestic appliance (2).

## Patentansprüche

1. Verfahren zur Befestigung eines Einbauhaushaltgeräts (2) an einem Möbelstück (3) mit einem Befestigungssystem (1), das Folgendes umfasst:
ein erstes Befestigungselement (7), umfassend eine erste Klebefläche (10), dazu geeignet, an einer ersten Seitenwand (9) des Einbauhaushaltgeräts (2) angeklebt zu werden, eine zweite Klebefläche (11) parallel und gegenüber der ersten Klebefläche (10) und dazu geeignet, an der ersten Seitenwand (4) des Möbelstücks (3) angeklebt zu werden, eine erste abnehmbare Schutzfolie (15), die zunächst die erste Klebefläche (10) bedeckt, und eine zweite abnehmbare Schutzfolie (16), die zunächst die zweite Klebefläche (11) bedeckt; und ein zweites Befestigungselement (8), umfassend eine dritte Klebefläche (13), dazu geeignet, an einer zweiten Seitenwand (12) des Einbauhaushaltgeräts (2) angeklebt zu werden, und eine vierte Klebefläche (14) parallel und gegenüber der dritten Klebefläche (13) und dazu geeignet, an der zweiten Seitenwand (5) des Möbelstücks (3) angeklebt zu werden, eine dritte abnehmbare Schutzfolie (17), die zunächst die dritte Klebefläche (13) bedeckt, und eine vierte abnehmbare Schutzfolie (18), die zunächst die vierte Klebefläche (14) bedeckt; wobei das Befestigungsverfahren die folgenden Schritte umfasst:
Ankleben der zweiten Klebefläche (11) des ersten Befestigungselements (7) an der ersten Seitenwand (4) des Möbelstücks (3), indem zuerst die zweite Schutzfolie (16) entfernt wird;
Ankleben der vierten Klebefläche (14) des zweiten Befestigungselements (8) an der zweiten Seitenwand (5) des Möbelstücks (3), indem zuerst die vierte Schutzfolie (18) entfernt wird;
Einsetzen des Einbauhaushaltgeräts (2) in das Möbelstück (3), wobei die erste abnehmbare Schutzfolie (15) und die dritte Schutzfolie (17) in Position bleiben;
Entfernen der ersten abnehmbaren Schutzfolie (15), um die erste Klebefläche (10) des ersten Befestigungselements (7) an die erste Seitenwand (9) des Einbauhaushaltgeräts (2) zu kleben; und
Entfernen der dritten abnehmbaren Schutzfolie (17), um die dritte Klebefläche (13) des zweiten Befestigungselements (8) an die zweite Seitenwand (12) des Einbauhaushaltgeräts (2) zu kleben.

## Revendications

1. Procédé pour fixer un appareil domestique encastré (2) à un meuble (3) en utilisant un système de fixation (1) incluant :
un premier élément de fixation (7) comprenant une première surface adhésive (10) appropriée pour être collée à une première paroi latérale (9) de l'appareil domestique encastré (2), une deuxième surface adhésive (11) parallèle et opposée à la première surface adhésive (10) et appropriée pour être collée à la première paroi latérale (4) du meuble (3), un premier film de protection amovible (15) qui couvre initialement la première surface adhésive (10), et un deuxième film de protection amovible (16) qui couvre initialement le deuxième surface adhésive (11) ; et un second élément de fixation (8) comprenant une troisième surface adhésive (13) appropriée pour être collée à une seconde paroi latérale (12) de l'appareil domestique encastré (2) et une quatrième surface adhésive (14) parallèle et opposée à la troisième surface adhésive (13) et appropriée pour être collée à la seconde paroi latérale (5) du meuble (3), un troisième film de protection amovible (17) qui couvre initialement la troisième surface adhésive (13), et un quatrième film de protection amovible (18) qui couvre initialement la quatrième surface adhésive (14) ; le procédé pour fixer inclut les étapes de :
le collage de la deuxième surface adhésive (11) du premier élément de fixation (7) à la première paroi latérale (4) du meuble (3), en enlevant en premier le deuxième film de protection (16) ;
le collage de la quatrième surface adhésive (14) du second élément de fixation (8) à la seconde paroi latérale (5) du meuble (3), en enlevant en premier le quatrième film de protection (18) ;
l'insertion de l'appareil domestique encastré (2) dans le meuble (3), laissant en position le premier film de protection amovible (15) et le troisième film de protection (17) ;
l'enlèvement du premier film de protection amovible (15) pour coller la première surface adhésive (10) du premier élément de fixation (7) à la première paroi latérale (9) de l'appareil domestique encastré (2) ; et
l'enlèvement du troisième film de protection amovible (17) pour coller la troisième surface adhésive (13) du second élément de fixation (8) à la seconde paroi latérale (12) de l'appareil domestique encastré (2).
